(19) **Europäisches Patentamt**
**European Patent Office**
**Office européen des brevets**

(11) **EP 1 647 719 B1**

(12) **EUROPEAN PATENT SPECIFICATION**

(45) Date of publication and mention
of the grant of the patent:
**18.04.2012 Bulletin 2012/16**

(51) Int Cl.:
*F15B 13/04* (2006.01)          *F15B 11/024* (2006.01)

(21) Application number: **05018113.0**

(22) Date of filing: **20.08.2005**

(54) **Hydraulic control valve with regeneration function**

Hydraulikventil mit Rückspeisung

Soupape hydraulique avec fonction de régénération

(84) Designated Contracting States:
**DE FR GB IT**

(30) Priority: **14.10.2004 KR 2004082273**

(43) Date of publication of application:
**19.04.2006 Bulletin 2006/16**

(73) Proprietor: **Volvo Construction Equipment
Holding Sweden AB
631 85 Eskilstuna (SE)**

(72) Inventors:
• **Koo, Bon Seok
Changwon,
Kyungsangnam-do (KR)**
• **Jeon, Man Suk
Changwon,
Kyungsangnam-do (KR)**

(74) Representative: **Weitzel, Wolfgang
Dr. Weitzel & Partner
Patent- und Rechtsanwälte
Friedenstrasse 10
89522 Heidenheim (DE)**

(56) References cited:
JP-A- 9 210 006     JP-A- 2002 061 605
US-A- 5 615 705     US-A- 5 862 831

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## BACKGROUND OF THE INVENTION

### 1. Field of the Invention

The present invention relates in general to a hydraulic control valve with a regeneration function for heavy construction equipment such as an excavator, more specifically, to a hydraulic control valve capable of maintaining the pressure in a regeneration fluid passage, irrespective of changes in the discharge flow rate of a hydraulic pump, the location of working equipment, the regeneration flow rate and the return flow rate.

### 2. Description of the Related Art

Traditionally, a hydraulic control valve for use in heavy construction equipment, e.g., an excavator, had two functions: firstly, it controls the flow of pressurized fluid discharged from a hydraulic pump and supplies it to an actuator, e.g., a hydraulic cylinder; and secondly, it sends pressurized fluid returning during the operation of the hydraulic cylinder to a tank. With technical advances, a hydraulic control valve of recent years now has a regeneration function, whereby part of the pressurized fluid returning to the tank is supplied back to the hydraulic cylinder.

As aforementioned, the hydraulic control valve with a regeneration function sends the return pressurized fluid en route to the tank back to the hydraulic cylinder. In result, the work speed and the energy efficiency can be increased. Besides, it is possible to prevent the so-called cavitation phenomenon generated by insufficiency of a flow rate supplied to the chamber of hydraulic cylinder due to the transport speed of the hydraulic cylinder increased by the self-weight of the working equipment. Cavitation usually occurs at insufficiency of a flow rate into the chamber of the hydraulic cylinder and causes each component's life to be shorten. When actions for cavitation preventing are taken, the components' life can thus be extended.

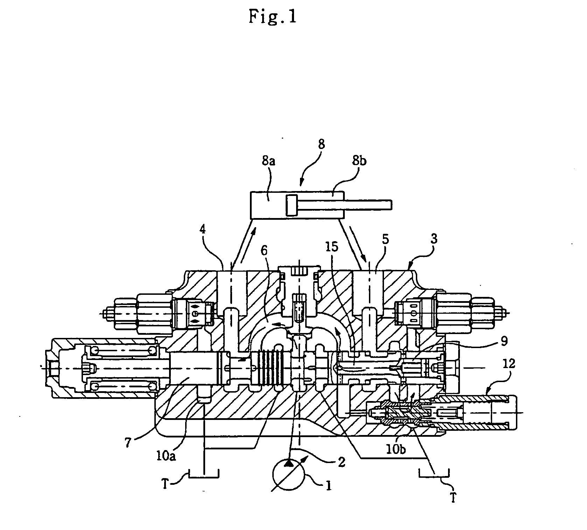

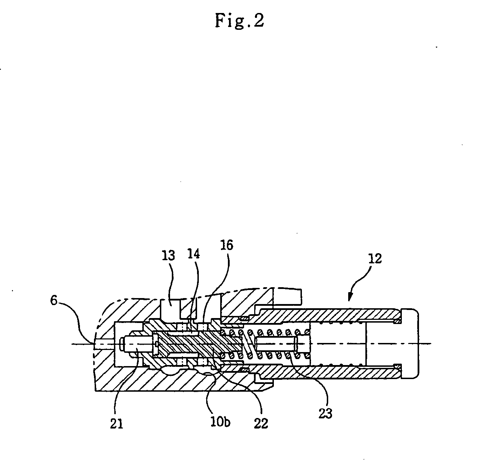

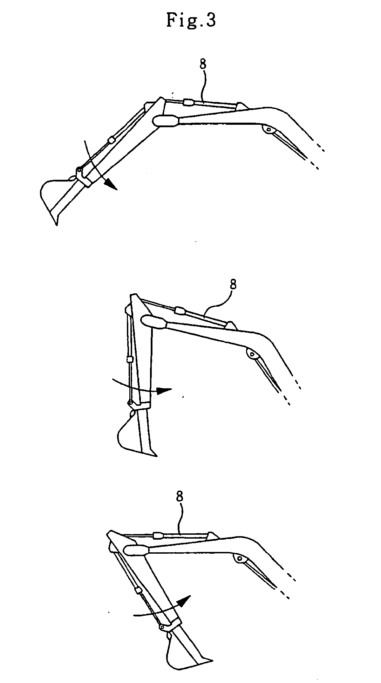

Fig. 1 is a cross-sectional view of a related art hydraulic control valve with a regeneration function; Fig. 2 is a partial exploded view of a regeneration valve in Fig. 1; and Fig. 3 is a schematic view illustrating an example of the operation of a working equipment. The following will now describe the operation of a hydraulic control valve 3.

A pressurized fluid discharged from a hydraulic pump 1 is supplied to the hydraulic control valve 3 through a feed line (or supply line) 2. When a spool 7 inside the hydraulic control valve 3 switches to the left or right side, the pressurized fluid of the hydraulic pump 1 is supplied to a first port 4 or a second port 5 via a supply fluid passage 6.

The first port 4 is connected to a large chamber 8a of a hydraulic cylinder 8, and the second port 5 is connected to a small chamber 8b thereof. Hence, if the spool 7 switches to the right side, pressurized fluid is supplied to the large chamber 8a through the first port 4, and the hydraulic cylinder 8 is extended to the right side. Meanwhile, the pressurized fluid discharged from the small chamber 8b returns to a reservoir or a storage tank T by way of the second port 5 and a tank fluid passage 10b.

If the spool 7 switches to the left side, pressurized fluid is supplied to the small chamber 8b through the second port 5, and the hydraulic cylinder 8 is retracted to the left side. Meanwhile, the pressurized fluid discharged from the large chamber 8a returns to the tank T by way of the first port 4 and the tank fluid passage 10a.

When the spool 7 switches to the right side, as shown in Fig. 3, the hydraulic cylinder 8 is extended and an 'arm-in' is performed. Here, the pressurized fluid discharged from the small chamber 8b of the hydraulic cylinder 8 is supplied to the supply fluid passage 6 by the regeneration valve 12. Thus, by supplying part of this pressurized fluid en route to the tank back to the supply side (e.g., the hydraulic cylinder), it becomes possible to increase energy efficiency.

The pressurized fluid discharged from the small chamber 8b sequentially passes through the second port 5, first regeneration fluid passage 13, connection fluid passage 14, return fluid passage 16, and tank fluid passage 10b. Because the original area of the return fluid passage 16 is small, a pressure is created in the first regeneration fluid passage 13. If this pressure is higher than the pressure in a second generation fluid passage 15, a poppet 9 housed in the spool 7 moves to the right side, and the pressurized fluid of the first generation fluid passage 13 flows into the direction of the supply fluid passage 6 through the second regeneration fluid passage 15.

On the other hand, if a large force is required to operate the hydraulic cylinder 8, the pressure of the second port 5 should be lower than the pressure of the first port 4, That is, the lower the pressure of the first regeneration fluid passage 13, the larger the operational force for the hydraulic cylinder 8.

The regeneration spool 22 is elastically supported by a spring 23, and its front part comes in contact with a piston 21 which moves by the pressure from the supply fluid passage 6. Thus, if the pressure of the supply fluid passage 6 is higher than a designated value the piston 21 of the regeneration valve 12 is pressed by the pressure from the supply fluid passage 6, and the regeneration spool 22 moves to the right side. In result, the area of the return fluid passage 16 gradually increases and the pressure of the first regeneration fluid passage 13 is lowered accordingly, providing a larger force for the operation of the hydraulic cylinder 8.

The change of pressure in the first regeneration fluid passage 13, the flow rate passing through the first regeneration fluid passage 13 and the tank fluid passage 10b, and the area of the return fluid passage 16 satisfy

the following equation:

$$\varDelta P = C \times (\frac{Q}{A})^2$$

ΔP: The change of pressure in the first regeneration fluid passage 13;

C: Flow coefficient;

Q: Flow rate from the first regeneration fluid passage 13 to the tank fluid passage 10b; and

A: Variable area of the return fluid passage 16.

Here, the flow rate Q is related to several variables, e.g., the feed rate of the hydraulic pump 1, the location of a working equipment shown in Fig. 3 for example, and the flow regenerated through the second regeneration fluid passage 15.

The change of pressure of the first regeneration fluid passage 13 and the pressure in the supply fluid passage 6 react sensitively to the flow rate Q and the area A. The change of the pressures in the first and second ports 4, 5 make the motion of the hydraulic cylinder unnatural and awkward (this phenomenon is called hunting) as a result of poor hydraulic stability. Therefore, it becomes very diffcult to control the motion of the hydraulic cylinder 8.

US-A-5 862 831 discloses a hydraulic control valve with a regeneration function comprising those features being placed in the preamble of present claim 1.

## SUMMARY OF THE INVENTION

It is, therefore, an object of the present invention to provide a hydraulic control valve with a regeneration function, capable of maintaining the pressure in a regeneration fluid passage, irrespective of changes in the discharge flow rate of a hydraulic pump, the location of working equipment, the regeneration flow rate and the return flow rate.

To achieve the above object, there is provided a hydraulic control valve equipped with a regeneration valve, in which the regeneration valve regenerates the return fluid from the hydraulic cylinder and supplies it to a supply fluid passage, and maintains the pressure of a regeneration fluid passage at a constant level in accordance with the change of pressure of the supply fluid passage, in detail with all features from present claim 1. The subclaims describe preferred embodiments.

Accordingly, the present invention provides a hydraulic control valve with a regeneration function, including: a main body formed of a supply fluid passage to which pressurized fluid from outside is supplied, at least one port for supplying the pressurized fluid in the supply fluid passage to an actuator or receiving the return fluid from the actuator, a tank fluid passage for discharging the return fluid from the actuator to an outside storage tank, and a first regeneration fluid passage for supplying part of the return fluid from the actuator to the supply fluid passage; a spool movably installed inside the main body for controlling the flow of pressurized fluid by opening/closing the connections of the supply fluid passage, the port(s), the tank fluid passage, and the first regeneration fluid passage, respectively, and comprising a second generation fluid passage that supplies the pressurized fluid of the first regeneration fluid passage to the supply fluid passage; and a regeneration valve installed between the first regeneration fluid passage and the tank fluid passage for returning only part of the pressurized fluid of the first regeneration fluid passage to the tank fluid passage to maintain pressure of the first regeneration fluid passage at a designated value, and for supplying the pressurized fluid to the second regeneration fluid passage; and if the pressure of the supply fluid passage is higher than a predetermined pressure, changing the pressure of the first regeneration fluid passage in accordance with a change of the pressure of the supply fluid passage.

Further, the regeneration valve includes a sleeve installed between the first regeneration fluid passage and the tank fluid passage, and formed of a first fluid passage communicating with the first regeneration fluid passage and a second fluid passage communicating with the tank fluid passage; a main poppet movably installed inside the sleeve by being elastically supported by a first spring for changing an opening area of the second fluid passage, and comprising a back pressure chamber formed therein; the main poppet is biased towards a closed position by a pressure in the back pressure chamber; a pilot poppet movably installed inside the sleeve by being elastically supported by a second spring, and if the pressure of the back pressure chamber exceeds a predetermined pressure, discharging pressurized fluid of the back pressure chamber to the tank fluid passage or through a separate external drain; and as seen from the supply fluid passage towards the back pressure chamber further a pilot piston movably installed on a piston passage formed in front of the main poppet to be in contact with the front end portion of the pilot poppet; and a piston slidably installed on the front side of the sleeve for the rear end of the piston to be in contact with the front end portion of the pilot piston, and if the pressure of the supply fluid passage applied to the front end portion of the pilot piston exceeds the predetermined pressure set for the pilot poppet, moving the pilot piston and the pilot poppet backward.

More preferably, the hydraulic control valve of the present invention further includes a pressure regulator installed on the rear end with the pilot poppet of the regeneration valve for assisting the second spring to change the predetermined pressure set for the pilot poppet.

More preferably, the pressure regulator is operated by a signal pressure inputted from outside.

## BRIEF DESCRIPTION OF THE DRAWINGS

The above objects, features and advantages of the present invention will become more apparent from the following detailed description when taken in conjunction with the accompanying drawings, in which:

Fig. 1 is a cross-sectional view of a related art hydraulic control valve with a regeneration function;

Fig. 2 is a partial exploded view of a regeneration valve in Fig. 1;

Fig. 3 is a schematic view illustrating an example of the operation of a working equipment

Fig. 4 is a cross-sectlonal view of a hydraulic control valve according to one embodiment of the present invention;

Fig. 5 is a partial exploded view of a regeneration valve in Fig. 4;

Fig. 6 graphically illustrates the change of pressure in the hydraulic control valve according to one embodiment of the present invention;

Fig. 7 is a partial cross-sectional view of a regeneration valve for a hydraulic control valve according to another embodiment of the present invention; and

Fig. 8 is a partial cross-sectional view of a regeneration valve in a hydraulic control valve according to yet another embodiment of the present invention.

## DETAILED DESCRIPTION OF THE PREFERRED EMBODIMENT

A preferred embodiment of the present invention will be described herein below with reference to the accompanying drawings. In the following description, well-known functions or constructions are not described in detail since they would obscure the invention in unnecessary detail.

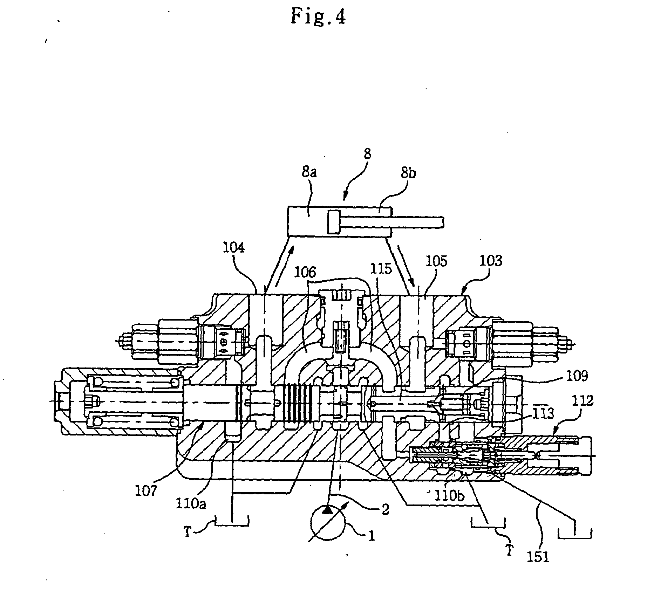

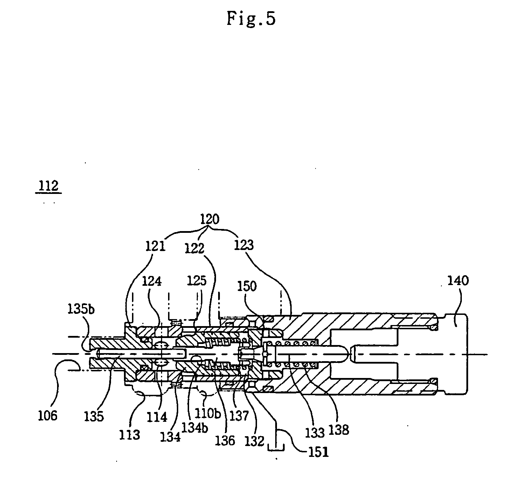

Fig. 4 is a cross-sectional view of a hydraulic control valve according to one embodiment of the present invention, and Fig. 5 is a partial exploded view of a regeneration valve in the hydraulic control valve of Fig. 4.

The hydraulic control valve with a regeneration function of the present invention supplies pressurized fluid to a hydraulic cylinder 8, one of actuators, and controls the operation thereof. The hydraulic control valve includes a main body 103 in which fluid passages for pressurized fluid are formed; a spool 107 slidably installed in the main body 103 for supplying pressurized fluid to the hydraulic cylinder 8; and a regeneration valve 112 for regenerating part of the pressurized fluid returning from the hydraulic cylinder 8.

Examples of the fluid passages formed in the main body 103 include a supply fluid passage 106 to which pressurized fluid discharged from a hydraulic pump 1 is supplied; a first port 104 and a second port 105 for supplying the pressurized fluid in the supply fluid passage 106 to the hydraulic cylinder 8, or receiving the return fluid from the hydraulic cylinder 8; and tank fluid passages 110a, 110b for discharging the return fluid from the hydraulic cylinder 8 to a storage tank T (e.g., reservoir). Further, the main body 103 includes a first regeneration fluid passage 113 for supplying pressurized fluid returning from the hydraulic cylinder 8 to the supply fluid passage 106, and regenerating the return fluid.

The spool 107 is slidably installed (e.g., in the lateral direction on the drawing) inside the main body 103. The spool 107 opens/closes the connections of the supply fluid passage 106, the first and second ports 104, 105, the tank fluid passage 110a, 110b, and the first regeneration fluid passage 113, respectively, in order to control the flow of pressurized fluid. In addition, inside the spool 107 is a second regeneration fluid passage 115 that supplies the pressurized fluid of the first regeneration fluid passage 113 to the supply fluid passage 106. A poppet 109 is slidably installed in the longitudinal direction of the second regeneration fluid passage 115. If the pressure of the first regeneration fluid passage 113 is higher than that of the second regeneration fluid passage 115, the poppet 109 moves to the right side and thereby, flowing the pressurized fluid of the first regeneration fluid passage 113 into the direction of the supply fluid passage 106 through the second regeneration fluid passage 115.

The regeneration valve 112 is installed between the first regeneration passage 113 and the tank fluid passage 110b so that only a part of pressurized fluid in the first regeneration passage 113 returns to the tank fluid passage 110b. As a result, the pressure of the regeneration passage 113 is maintained regularly, and the regeneration function of supplying the pressurized fluid to the second regeneration passage 115 is carried out.

The regeneration valve 112 includes a sleeve 120 installed between the first regeneration fluid passage 113 and the tank fluid passage 110b inside the main body 103; a main poppet 134 slidably installed in the sleeve 120; a pilot poppet 133 installed on the rear side of the main poppet 134; a pilot piston 136 slidably installed, passing through the main poppet 134; and a piston 135 slidably installed on the front side of the sleeve 120.

The sleeve 120 of the regeneration valve 112 is formed of three bodies, namely, a first body 121, a second body 122, and a third body 123, being sequentially connected. Inside the second body 122 is a first fluid passage 124 communicating with the first regeneration fluid passage 113, and a second fluid passage 125 communicating with the tank fluid passage 110b.

The main poppet 134, being elastically supported by a first spring 137, is slidably installed inside the sleeve 120. If the main poppet 134 translates laterally inside the sleeve 120, the opening area of the second fluid passage 125 changes. Moreover, the main poppet 134 has a back pressure chamber 132, that opens towards the back.

The pilot poppet 133, being elastically supported by a second spring 138, is slidably installed inside the sleeve 120.

The pressure from the supply fluid passage 106 moves the piston 135 to the right side, and because of this, the pilot piston 136 and the pilot poppet 133 in contact with the piston 135 move to the right side as well.

Therefore, as the pilot poppet 133 moves backward, pressurized fluid of the back pressure chamber 132 passes through a discharge fluid passage 150, and is discharged through a separate external drain 151, or (although not shown) if the discharge fluid passage 150 is communicated with the tank fluid passage 110b the pressurized fluid of the back pressure chamber 132 can be discharged to the storage tank T. In such case, the main poppet 134 also moves to the right side, and the pressurized fluid of the first regeneration fluid passage 113 travels to the connection fluid passage 114 and the second fluid passage 125, and eventually is discharged to the tank fluid passage 110b.

The rear end portion of the pilot piston 136 comes in contact with the front end portion of the pilot poppet 133, whereas the front end portion of the pilot piston 136 passes through a piston passage 134b formed in front of the main poppet 134, whereby the pilot piston 136 can slide with respect to the main poppet 134.

The rear end portion of the piston 135 comes in contact with the front end portion of the pilot piston 136, whereas the front end portion of the piston 135 is movably inserted into a front passage 135b of the first body 121 of sleeve 120. Thus, the pressure of the supply fluid passage 106 is applied to the front end portion of the piston 135. When the pressure of the supply fluid passage 106 exceeds a predetermined pressure for the pilot poppet 133, the piston 135 pressurizes the pilot piston 136 and the pilot poppet 133 backward.

The following will now explain the operation of the hydraulic control valve with a regeneration function.

Pressurized fluid discharged from the hydraulic pump 1 is supplied to the hydraulic control valve 103 through the supply fluid passage 2. As the spool 107 switches to the right or the left side, the pressurized fluid of the hydraulic pump 1 is supplied to the first port 104 or the second port 105 through the supply fluid passage 106.

If the spool 107 switches to the right side, the pressurized fluid is supplied to the large chamber 8a through the first port 104. In result, the hydraulic cylinder 8 is extended to the right side, and the pressurized fluid discharged from the small chamber 8b returns to the storage tank T via the second port 105 and the tank fluid passage 110b. Here, part of the return fluid is regenerated by the regeneration valve 112 and flows into the supply fluid passage 106.

If the pressure formed in the supply fluid passage 106 is higher than the pressure of the pilot poppet 133 predetermined by the second spring 138, the pilot poppet 133 will be shift to right so that the back pressure chamber 132 is opened to the tank passage portion 110b. This means to drop the pressure of regeneration passage 113. Therefore, the pressure of supply passage 106 can be used to move the cylinder 8, it is connected an attachment, with more power.

In another case, the regeneration process is performed when the pressure of the supply fluid passage 106 is lower than the predetermined pressure. For instance, the pressurized fluid discharged from the small chamber 8b of the hydraulic cylinder 8 is supplied to the first regeneration fluid passage 113 via the second port 105. Then, it sequentially passes through the first and second fluid passages 124, 125 of the regeneration valve 112, and returns to the storage tank T through the tank fluid passage 110b.

Because the second passage 125 is blocked at first by the main poppet 134, a pressure is created in the first regeneration fluid passage 113. If this pressure is higher than the pressure of the second regeneration fluid passage 115, the poppet 109 installed inside the spool 107 moves to the right side and thus, the pressurized fluid of the first regeneration fluid passage 113 flows into the supply fluid passage 106 through the second regeneration fluid passage 115.

In the course of the regeneration process, if an applied pressure to the back pressure chamber 132 is higher than the predetermined pressure set for the pilot poppet 133 by the second spring 138, the pilot poppet 133 moves to the right side. Accordingly, the pressure of the back pressure chamber 132 is lowered and at the same time, the pilot piston 136 moves to the left side and the main poppet 134 moves to the right side. In result, the pressurized pressure of the first regeneration fluid passage 113 is discharged to the storage tank 110b.

Thanks to the regeneration function, the pressure of the first regeneration fluid passage 113 is not much affected by the change of the flow rate, but maintains a constant level. Thus, hunting does not occur and the motion of the hydraulic cylinder 8 can be controlled gently.

When the hydraulic cylinder 8 is up to a large-load-requiring work, the regeneration valve 112 lowers the pressure of the first regeneration fluid passage 113. So that the pressure of supply passage 106 is used to move the cylinder 8, it is connected an attachment, with more power.

The pilot poppet 133 is elastically supported by the second spring 138, and this makes setting pressure predetermined. Meanwhile, the pressure of the supply fluid passage 106 is applied to the front end portion of the piston 135. If the pressure of the supply fluid passage 106 exceeds the predetermined pressure of the pilot poppet 133, the piston 135 pressurizes the pilot piston 136 and the pilot poppet 133 backward.

Therefore, when the pilot poppet 133 moves backward and thus the pressurized fluid of the back pressure chamber 132 is discharged to the tank fluid passage 110b, the pressure created in the first regeneration fluid passage 113 is reduced proportionally to an increase of pressure of the supply fluid passage 106. As a result, the change of pressure of the supply fluid passage 106 connected to the first regeneration fluid passage 113 becomes very small, and the motion of the hydraulic cylinder 8 is stabilized without being unnatural or awkward (i.e., hunting).

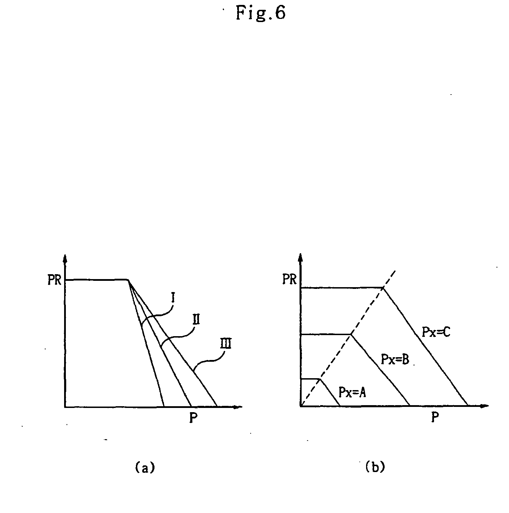

Fig. 6 graphically illustrates the change of pressure in the hydraulic control valve according to one embodiment of the present invention. In the drawing, PR denotes an applied pressure to the first regeneration fluid passage; Px denotes a signal pressure inputted from outside; P denotes an applied pressure of the supply fluid passage; and A, B and C denote arbitrary input values from outside (A < B < C).

As can be seen in Fig. 6(a), the ratio of the pressure of the supply fluid passage 106 to the pressure of the first regeneration fluid passage 113 can be controlled in dependence of the size correlation between the piston 135 and the pilot poppet 133.

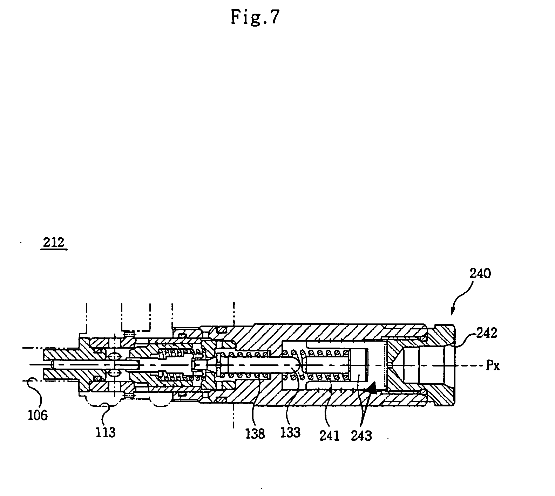

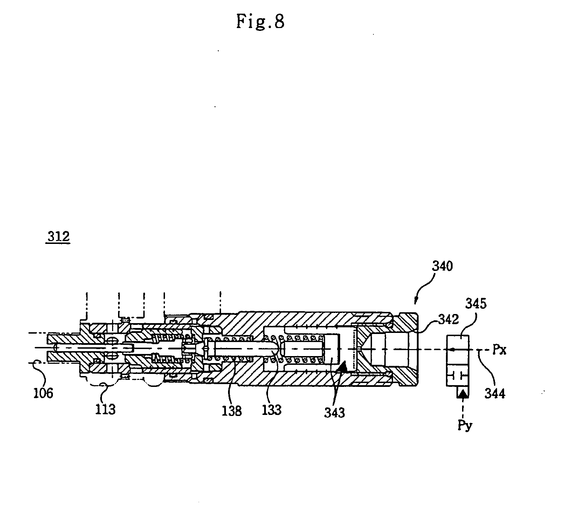

Sometimes, there is need to combine the operation of one hydraulic-driven working equipment with another working equipment. In this case, the pressure on the supply side of the hydraulic pump is increased compulsorily to carry out a large work load. This can be realized by other embodiments of the present invention shown in Fig. 7 and Fig. 8, respectively.

Fig. 7 is a partial cross-sectional view of a regeneration valve for a hydraulic control valve according to another embodiment of the present invention.

In this embodiment, the regeneration valve 212 of a hydraulic control valve is operated additionally by a signal pressure Px inputted from outside. When a signal pressure Px is inputted from outside through a signal-inlet 242, a pressure piston 243 whose rear side is supported by a third spring 241 pressurizes the rear end of the pilot poppet 133, whereby the piston 243 together with a second spring 138 changes a predetermined pressure set for the pilot poppet 133.

According to another embodiment of the present invention, when the pressure of a first regeneration fluid passage 113 increased at a result of the applied signal pressure Px, the pressure of a supply fluid passage 106 also increases. In this manner, the combined operation with another working equipment of a large load can be achieved. Fig. 6(b) briefly illustrates the relation between the pressure of the supply fluid passage 106 and the pressure of the first regeneration fluid passage 113.

Fig. 8 is a partial cross-sectional view of a regeneration valve in a hydraulic control valve according to yet another embodiment of the present invention.

Similar to the embodiment shown in Fig. 7, the regeneration valve 312, and a cut-off valve 345 connected to the signal-inlet 342 is installed on a signal passage 344 for supplying an external signal pressure Px.

If a signal pressure Py is inputted to the cut-off valve 345, the cut-off valve 345 switches, say, upward as shown in Fig. 8, to cut off the input of the signal pressure Px to the signal-inlet 342. Meanwhile, if the signal pressure Py is not inputted to the cut-off valve 345, the cut-off valve 345 switches, say, downward as shown in Fig. 8, and allows the signal pressure Px to be inputted to the signal-inlet 342. In result, the front end portion of a pressure piston 343 together with a second spring 138 pressurize the rear end portion of a pilot poppet 133, and change a predetermined pressure set for the pilot poppet 133.

According to yet another embodiment of the present invention, if a large load is applied to the work all the time, the signal pressure Px can always be applied to the signal-inlet 342 anytime to increase the pressure of the supply fluid passage 106. And, when another work equipment requesting a large load is used, the signal pressure Px is cut off and one makes sure that the signal pressure Px is not inputted to the signal-inlet 342. In this manner, the pressure of the supply fluid passage 106 will not be high.

As described above, the hydraulic control valve with the regeneration function according to the present invention is capable of maintaining the pressure in a regeneration fluid passage, irrespective of changes in the discharge flow rate of a hydraulic pump, the location of working equipment, the regeneration flow rate and the return flow rate, so that hunting of the actuator rarely occurs.

While the invention has been described in conjunction with various embodiments, they are illustrative only. Accordingly, many alternative, modifications and variations will be apparent to persons skilled in the art in light of the foregoing detailed description. The foregoing description is intended to embrace all such alternatives and variations falling within the scope of the appended claims.

**Claims**

1. A hydraulic control valve with a regeneration function, comprising:

   a main body (103) formed of a supply fluid passage (106) to which pressurized fluid from outside is supplied, at least one port (104, 105) for supplying the pressurized fluid in the supply fluid passage (106) to an actuator or receiving the return fluid from the actuator, a tank fluid passage (110a, 110b) for discharging the return fluid from the actuator to an outside storage tank (T), and a first regeneration fluid passage (113) for supplying part of the return fluid from the actuator to the supply fluid passage (106);
   a spoot (107) movably installed inside the main body (103) for controlling the flow of pressurized fluid by opening/closing the connections of the supply fluid passage (106), the port(s) (104, 105), the tank fluid passage (110a, 110b), and the first regeneration fluid passage (113), respectively, and comprising a second regeneration fluid passage (115) that supplies the pressurized fluid of the first regeneration fluid passage (113) to the supply fluid passage (106); and a regeneration valve (112) installed between the first regeneration fluid passage (113) and the tank fluid passage (110a, 110b) for returning only part of the pressurized fluid of the first regeneration fluid passage (113) to the tank fluid passage (110a, 110b) to maintain pressure of the first regeneration fluid passage (113) at a designated value, and for supplying the pressurized fluid to the second regeneration fluid passage (115); and if the pressure of the supply fluid passage (106) is higher than a predetermined pressure, changing the pressure of the first regeneration fluid passage (113) in accordance with a change of the pressure of the supply fluid passage (106), **characterized by** the following features:

the regeneration valve (112) is comprised of:

a sleeve (120) installed between the first regeneration fluid passage (113) and the tank fluid passage (110a, 110b), and formed of a first fluid passage (124) communicating with the first regeneration fluid passage (113) and a second fluid passage (125) communicating with the tank fluid passage (110a,110b)

a main poppet (134) movably Installed inside the sleeve (120) by being elastically supported by a first spring (137) for changing an opening area of the second fluid passage (125), and comprising a back pressure chamber (132) formed therein; the main poppet (134) is biased towards a closed position by a pressure in the back pressure chamber (132);

a pilot poppet (133) movably installed inside the sleeve (120) by being elastically supported by a second spring (138), and if the pressure of the back pressure chamber (132) exceeds a predetermined pressure, discharging pressurized fluid of the back pressure chamber (132) to the tank fluid passage (110a, 110b) or through a separate external drain (151);

a pilot piston (136) movably installed on a piston passaged (134b) formed in front of the main poppet (134) to be in contact with the front end portion of the pilot poppet (133), and

a piston (135) slidably installed on the front side of the sleeve (120) for the rear end of the piston (135) to be in contact with the front end portion of the pilot piston (136), and if the pressure of the supply fluid passage (106) applied to the front end portion of the piston (135) exceeds the predetermined pressure set for the pilot poppet (133), moving the pilot piston (136) and the pilot poppet (133) backward against the second spring (138).

2. The hydraulic control valve according to claim 1, further comprising:

a pressure regulator (240, 340) installed on the rear end with the pilot poppet (133) of the regeneration valve (212, 312) for assisting the second spring (138) to change the predetermined pressure set for the pilot poppet (133).

3. The hydraulic control valve according to claim 2, wherein the pressure regulator (240, 340) is operated by a signal pressure (Px) inputted from outside.

**Patentansprüche**

1. Hydrauliksteuerventil mit Regenerierfunktion, umfassend:

einen Hauptkörper (103), gebildet durch einen Versorgungsfluiddurchlass (106), dem von aussen ein Druckfluid zugeführt wird, mindestens einen Anschluss (104, 105) zum Einspeisen des Druckfluids im Versorgungsfluiddurchlass (106) in ein Stellglied oder zum Aufnehmen des Rücklauffluids vom Stellglied, einen Tank-Fluiddurchlass (110a, 110b) zum Ableiten des Rücklauffluids vom Stellglied an einen externen Speichertank (T) und einen ersten Regenerierfluiddurchlass (113) zum Einspeisen eines Teils des Rücklauffluids vom Stellglied in den Versorgungsfluiddurchlass (106),

einen Kolben (107), der im Inneren des Hauptkörpers (103) beweglich angeordnet ist, um den Druckfluidstrom durch Öffnen/Schließen der Anschlüsse des Versorgungsfluiddurchlasses (106), des Anschlusses/der Anschlüsse (104, 105), des Tank-Fluiddurchlasses (110a, 110b) und des ersten Regenerierfluiddurchlasses (113) entsprechend zu steuern, und

einen zweiten Regenerierfluiddurchlass (115) umfasst, der das Druckfluid aus dem ersten Regenerierfluiddurchlass (113) dem Versorgungsfluiddurchlass (106) zuführt, und

ein Regenerierventil (112), das zwischen dem ersten Regenerierfluiddurchlass (113) und dem Tank-Fluiddurchlass (110a, 110b) angeordnet ist, um nur einen Teil des Druckfluids aus dem ersten Regenerierfluiddurchlass (113) dem Tank-Fluiddurchlass (110a, 110b) zurückzuführen, und um den Druck des ersten Regenerierfluiddurchlasses (113) bei einem Sollwert zu halten, und zum Einspeisen des Druckfluids in den zweiten Regenerierfluiddurchlass (115), und zum Ändern des Drucks im ersten Regenerierfluiddurchlass (113) entsprechend einer Änderung des Drucks im Versorgungsfluiddurchlasss (106), wenn der Druck im Versorgungsfluiddurchlass (106) einen vorbestimmten Druck überschreitet, **gekennzeichnet durch** die folgenden Merkmale:

das Regenerierventil (112) umfasst:

eine Buchse (120), die zwischen dem ersten Regenerierfluiddurchlass (113) und dem Tank-Fluiddurchlass (110a, 110b) angeordnet ist und aus einem ersten Fluiddurchlass (124), der mit dem ersten Regenerierfluiddurchlass (113) in Verbindung steht, und aus einem zweiten Fluiddurchlass (125), der mit dem Tank-Fluiddurchlass (110a, 110b) in Verbindung steht, gebildet ist, einen Haupt-Absperrkörper (134), der beweglich im Inneren der Buchse (120) angeordnet ist, indem er mit einer ersten Feder (137) elastisch abgestützt ist, um eine Öffnungsfläche des zweiten Fluiddurchlasses (125) zu verändern, und mit einer darin ausgebildeten Gegendruckkammer (132), wobei der Haupt-Absperrkörper (134) **durch** einen Druck in der Gegendruckkammer (132) gegen eine Schließstellung vorgespannt ist; einen Steuer-Absperrkörper (133), der im Inneren der Buchse (120) beweglich angeordnet ist, indem er mit einer zweiten Feder (138) elastisch abgestützt ist, um Druckfluid aus der Gegendruckkammer (132) in den Tank-Fluiddurchlass (110a, 110b) oder **durch** einen separaten, externen Abfluss (151) abzulassen, wenn der Druck in der Gegendruckkammer (132) einen vorbestimmten Druck überschreitet; einen Steuerkolben (136), der beweglich an einem Kolbendurchlass (134b) angeordnet ist, welcher vor dem Haupt-Absperrkörper (134) ausgebildet ist, um am vorderen Endabschnitt des Steuer-Absperrkörpers (133) zur Anlage zu kommen, und einen Kolben (135), der an der Vorderseite der Buchse (120) verschiebbar angeordnet ist, um das hintere Ende des Kolbens (135) gegen den vorderen Endabschnitt des Steuerkolbens (136) zur Anlage zu bringen, und um den Steuerkolben (136) und den Steuer-Absperrkörper (133) gegen die zweite Feder (138) zurückzubewegen, wenn der Druck im Versorgungsfluiddurchlass (106), der auf den vorderen Endabschnitt des Kolbens (135) aufgebracht wird, den vorbestimmten Druck überschreitet, der für den Steuer-Absperrkörper (133) eingestellt ist.

**2.** Hydrauliksteuerventil nach Anspruch 1, ferner umfassend:

einen Druckregler (240, 340), der am hinteren Ende mit dem Steuer-Absperrkörper (133) des Regenerierventils (212, 312) angeorndet ist, um die zweite Feder (138) beim Ändern des für den Steuer-Absperrkörper (133) eingestellten Drucks zu unterstützen.

**3.** Hydrauliksteuerventil nach Anspruch 2, wobei der Druckregler (240, 340) durch einen von aussen eingegebenen Signaldruck ($P_x$) betätigt wird.

## Revendications

**1.** Vanne de régulation hydraulique avec fonction de régénération, comprenant :

un corps principal (103) formé d'un passage d'alimentation (106) pour le liquide auquel du liquide sous pression est fourni depuis l'extérieur, au moins un raccordement (104, 105) pour amener du liquide sous pression dans le passage d'alimentation (106) à un vérin ou pour recevoir du liquide revenant du vérin, un passage de liquide (110a, 110b) vers un réservoir pour évacuer le liquide renvoyé du vérin vers un réservoir de stockage extérieur (T) et un premier passage de régénération (113) pour amener une partie du liquide renvoyé du vérin au passage d'alimentation (106); un piston (107) installée de façon mobile à l'intérieur du corps principal (103) pour réguler l'écoulement du liquide sous pression en ouvrant ou fermant les raccords du passage d'alimentation (106), des raccordements (104, 105), du passage vers le réservoir (110a, 110b) et du premier passage de régénération (113) pour le liquide, respectivement, et comprenant un deuxième passage de régénération (115) qui amène le liquide sous pression du premier passage de régénération (113) au passage d'alimentation (106) et

une vanne de régénération (112) installée entre le premier passage de régénération (113) et le passage vers le réservoir (110a, 110b) pour renvoyer seulement une partie du liquide sous pression du premier passage de régénération (113) au passage vers le réservoir (110a, 110b) afin de maintenir la pression du premier passage de régénération (113) à une valeur désignée et pour amener le liquide sous pression au deuxième passage de régénération (115) et, si la pression du passage d'alimentation (106) pour le liquide dépasse une pression prédéterminée, modifier la pression du premier passage de régénération (113) en fonction d'un changement de la pression du passage d'alimentation (106), **caractérisé en ce que** :

la vanne à régénération (112) comprend des éléments suivants :

un manchon (120) installé entre le premier passage de régénération (113) et le passage vers le réservoir (110a, 110b) et formé d'un premier passage (124) pour le liquide communicant avec le premier passage de régénération (113) et d'un deuxième passage (125) pour le liquide communicant avec le passage vers le réservoir (110a, 110b), un clapet principal (134) installé de façon mobile à l'intérieur du manchon (120) en étant supporté de façon élastique par un premier ressort (137) pour modifier une aire d'ouverture du deuxième passage (125), et contenant une chambre de contre-pression (132), le clapet principal (134) étant précontraint vers une position fermée par une pression dans la chambre de contre-pression (132) ; un clapet pilote (133) installé de façon mobile à l'intérieur du manchon (120) en étant supporté de façon élastique par un deuxième ressort (138) et, si la pression dans la chambre contre-pression (132) dépasse une pression prédéterminée, évacuant le liquide sous pression de la chambre de contre-pression (132) vers le passage vers le réservoir (110a, 110b) ou à travers une conduite d'évacuation externe (151) séparée ; et un piston pilote (136) installé de façon mobile dans un passage de piston (134b) formé devant le clapet principal (134) de façon à être en contact avec la partie d'extrémité avant du clapet pilote (133) et

un piston (135) installé de façon coulissante sur le côté avant du manchon (120) pour que l'extrémité arrière du piston (135) soit en contact avec la partie d'extrémité avant du piston pilote (136) et, si la pression du passage d'alimentation (106) exercée sur la partie d'extrémité avant du piston (135) dépasse la pression prédéterminée fixée pour le clapet pilote (133), déplacer le piston pilote (136) et le clapet pilote (133) vers l'arrière contre le deuxième ressort (138).

2. Vanne de régulation hydraulique selon la revendication 1, comprenant en outre un régulateur de pression (240, 340) installé avec le clapet pilote (133) à l'extrémité arrière de la vanne de régénération (212, 312) pour aider le deuxième ressort (138) à modifier la pression prédéterminée réglée pour le clapet pilote (133).

3. Vanne de régulation hydraulique selon la revendication 2, dans laquelle le régulateur de pression (240, 340) est actionné par une pression de signal (Px) entrée depuis l'extérieur.

Fig.1

Fig.2

Fig.3

# Fig.4

Fig.5

Fig.6

(a)

(b)

Fig.7

Fig.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5862831 A